# FASCICULE DE BREVET EUROPEEN

(11) **EP 0 813 663 B1**
(45) Date de publication et mention de la délivrance du brevet: **01.09.1999**
(21) Numéro de dépôt: 96905888.2
(22) Date de dépôt: 29.02.1996
(51) Int. Cl.: F16L 3/26

(54) **DISPOSITIF DE RACCORDEMENT D'ANGLE POUR CONDUIT A CORPS EN GOUTTIERE ET COUVERCLE TEL QUE MOULURE, PLINTHE OU GOULOTTE, NOTAMMENT POUR APPAREILLAGE ELECTRIQUE**
ECKVERBINDUNGSVORRICHTUNG FÜR EINE RINNENFÖRMIGE LEITUNG UND EINE ABDECKUNG WIE Z.B. EINE PROFILLEISTE, EINE SOCKELLEISTE ODER EINE RINNE, INSBESONDERE FÜR EIN ELEKTRISCHES BAUTEIL
CORNER CONNECTION DEVICE FOR A DUCT WITH A CHANNEL-SHAPED BODY AND A COVER, E.G. A CASING, SKIRTING BOARD OR TROUGH, PARTICULARLY FOR ELECTRICAL EQUIPMENT

(30) Priorité: 09.03.1995 FR 9502753
(43) Date de publication de la demande: 29.12.1997
(73) Titulaire: PLANET-WATTOHM, 60300 Senlis (FR)
(72) Inventeur: THIROUIN, Stéphane, F-60300 Senlis (FR); COUTANT, Régis, F-60117 Vauciennes (FR)
(74) Mandataire: CABINET BONNET-THIRION
(86) Numéro de dépôt international: FR9600316
(87) Numéro de publication internationale: WO9628681

(56) Documents cités:
- EP-A- 0 016 618
- DE-A- 2 727 361
- GB-A- 1 522 598

## Description

La présente invention concerne d'une manière générale les conduits, à corps en gouttière et couvercle convenablement rapporté sur un tel corps, du type de ceux communément mis en oeuvre pour l'installation de quelconques appareillages électriques, tels que prises de courant ou autres, aussi bien que pour celle des conducteurs électriques nécessaires à leur desserte, qu'il s'agisse de plinthes, lorsque de tels conduits sont directement implantés en plinthe au pied de quelconques murs ou cloisons, ou qu'il s'agisse de moulures ou goulottes implantées en pleine surface sur de tels murs ou cloisons, par exemple le long de l'encadrement de quelconques ouvertures ajourant ceux-ci.

Elle vise plus particulièrement le raccordement à assurer entre deux tronçons de tels conduits lorsque ces tronçons sont chacun respectivement implantés sur deux murs ou cloisons se recoupant l'un l'autre suivant un angle, qui est normalement un angle droit.

Le plus souvent, à ce jour, le dispositif de raccordement d'angle mis en oeuvre à cet effet comporte de manière rigide deux embouts, qui sont chacun respectivement destinés à être aboutés au couvercle des deux tronçons de conduit à raccorder, et qui forment eux-mêmes entre eux un angle droit.

Malheureusement, il n'est pas rare que, par suite d'irrégularités de construction, les murs ou cloisons concernés ne soient pas rigoureusement d'équerre l'un par rapport à l'autre.

Il en résulte que, au détriment notamment de l'esthétique de l'ensemble, les dispositifs de raccordement d'angle rigides du type mentionné ci-dessus ne conviennent alors qu'imparfaitement, du fait qu'ils ne sont pas en mesure de permettre que soient prises en compte de telles irrégularités de construction.

Pour pallier cet inconvénient, il a été proposé dans des réalisations connues à ce jour, pour des dispositifs de raccordement d'angle convenant à des changements de direction dans des plans différents, de mettre en oeuvre des moyens de charnière entre les embouts que comportent ces dispositifs de raccordement d'angle, pour leur permettre de faire entre eux un angle s'écartant plus ou moins de l'équerre, les moyens de charnière mis en oeuvre entre les embouts correspondants étant établis à la base des ailes latérales de tels embouts, parallèlement à leur partie médiane, mais à distance de celle-ci, et, pour la constitution de moyens de recouvrement nécessaires pour combler le vide qui se déploierait autrement entre eux en fonction de leur orientation relative, l'un de ces embouts doit se prolonger par une coquille que l'autre recouvre à la manière d'une genouillère.

De telles réalisations sont relativement compliquées. En outre, ledit recouvrement ne satisfait pas l'esthétique de l'ensemble.

La présente invention a pour but de proposer un dispositif de raccordement qui soit simple à réaliser et à mettre en oeuvre et qui satisfasse l'esthétique de l'ensemble.

Ainsi, selon l'invention, un dispositif de raccordement d'angle pour conduit à corps en gouttière et couvercle, du type comportant un connecteur pour joindre les corps de deux tronçons de conduit et une coiffe pour joindre les couvercles desdits deux tronçons, des moyens complémentaires d'accrochage étant prévus pour le maintien de la coiffe par rapport au connecteur, est caractérisé par le fait que le connecteur est constitué de deux embouts articulés par une charnière et la coiffe comprend deux montants recouverts et assemblés par une peau en matière souple et élastique.

Avantageusement, les embouts sont en matière plastique moulée et la charnière résulte d'un amincissement de matière lors du moulage d'une seule pièce des embouts et de la charnière.

De préférence, les embouts sont constitués d'une plaquette munie sur son bord opposé à celui le long duquel est ménagée la charnière de pattes longitudinales destinées à être reçues dans des logements définis par un fond du corps des troncons de conduit et le mur ou cloison sur lequel ledit fond est fixé ; la plaquette est munie sur ce même dit bord de languettes élastiques longitudinales destinées à prendre appui élastiquement sur la face dudit fond opposée à celle qui est appliquée au mur ou cloison.

Avantageusement, les montants de la coiffe sont constitués d'une partie plane allongée, prolongée par une partie ayant une forme correspondant à celle du couvercle du tronçon de conduit avec lequel elle est adaptée à coopérer.

De préférence, les montants, d'une part, et la peau, d'autre part, sont en matières plastiques non compatibles chimiquement.

Avantageusement, les moyens complémentaires d'accrochage sont constitués par des pattes transversales portées par le connecteur qui coopèrent avec des rebords longitudinaux portés par les montants de la coiffe et dirigés en sens contraire par rapport à celui desdites pattes transversales ; les moyens complémentaires d'accrochage sont constitués par des pattes transversales portées par le connecteur qui coopèrent avec des languettes élastiques transversales portées -par les montants de la coiffe et dirigées en sens contraire par rapport à celui desdites pattes transversales.

Avantageusement, les moyens d'accrochage portés par la coiffe s'étendent vers l'extrémité plane inférieure des montants : cette disposition permet la mise en place de la coiffe verticalement de haut en bas ; ainsi, la mise en place de la coiffe est aisée même s'il s'agit d'un conduit implanté en plinthe au pied d'un mur ou cloison .

Avantageusement, les montants de la coiffe présentent des arcs, un arc de l'un étant intercalé entre deux arcs de l'autre, lesdits arcs soutenant la peau de la coiffe tout en pouvant se déplacer légèrement par rapport à elle.

Les caractéristiques et avantages de l'invention ressortiront d'ailleurs de la description qui va suivre en référence aux dessins annexés sur lesquels:
- la figure 1 est une vue en perspective éclatée montrant un dispositif de raccordement selon l'invention, vu de l'extérieur et de dessus, ainsi que l'un des troncons de conduit à raccorder représenté partiellement ;
- la figure 2 représente en perspective le connecteur du dispositif de la figure 1, vu de l'extérieur et de dessous ;
- la figure 3 représente en perspective la coiffe du dispositif de la figure 1 vue de l'intérieur et de dessous ;
- la figure 4 est une vue en coupe selon IV-IV de la figure 3 ;
- la figure 5 représente en perspective l'un des montants de la coiffe de la figure 3 vu de l'intérieur et de dessus ;
- la figure 6 est une vue en perspective éclatée montrant une variante de dispositif de raccordement selon l'invention, vu de l'intérieur et de dessus ;
- la figure 7 représente en perspective le connecteur du dispositif de la figure 6 vu de côté et de dessous ;
- la figure 8 représente en perspective la coiffe du dispositif de la figure 6 vue de côté et de dessous.

Il s'agit donc d'assurer le raccordement de deux tronçons de conduit, tels que le tronçon de conduit 10, appliqués chacun respectivement à deux murs ou cloisons faisant un angle entre eux, autrement dit d'assurer un changement de direction dans des plans différents.

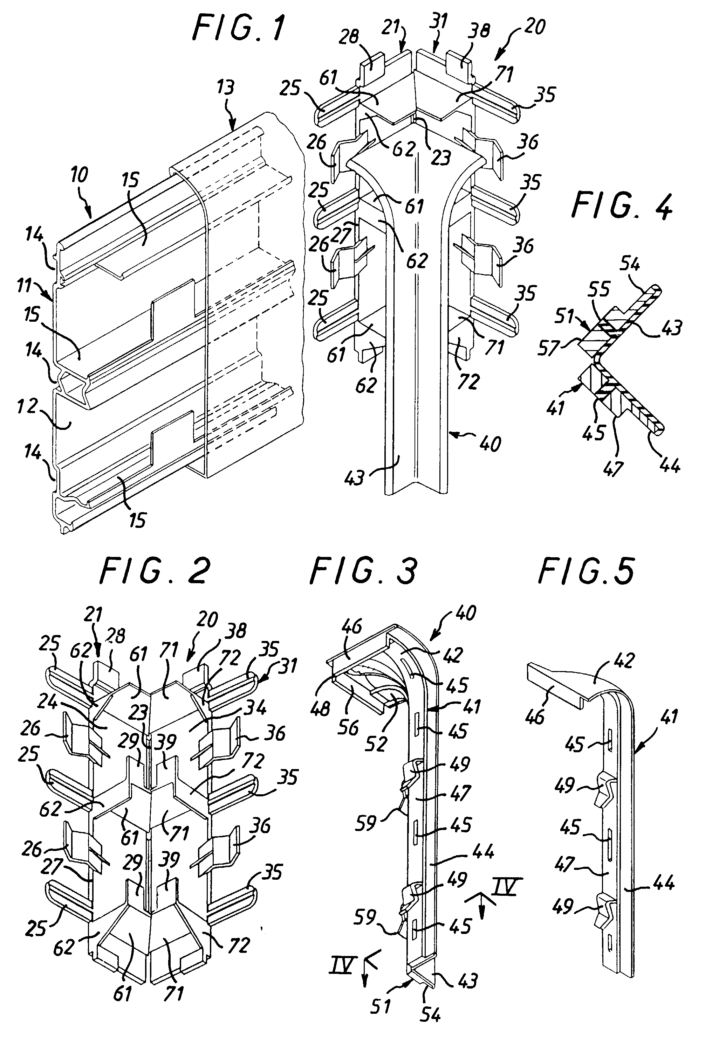

Par exemple, et c'est l'objet du dispositif représenté sur les figures 1 à 3, cet angle est un angle rentrant ou intérieur de valeur voisine de 90 degrés.

Chacun des tronçons de conduit 10 comporte un corps 11 d'allure générale en forme de gouttière et ayant un fond 12 par lequel il est appliqué et solidarisé au mur correspondant, ainsi qu'un couvercle 13 rapporté sur le corps 11 par clipsage, comme connu en soi; le corps 11 et le couvercle 13 sont des profilés tronçonnés à la demande.

Pour le raccordement, dans l'angle des murs, des tronçons de conduit 10 ainsi constitués, il est mis en oeuvre un dispositif de raccordement comprenant un connecteur 20 et une coiffe 40.

Le connecteur 20, constituant en quelconque sorte le fond du dispositif, comprend deux parties 21, 31 constituant chacune un embout, s'étendant transversalement, les deux embouts étant articulés l'un à l'autre par une charnière 23 ; avantageusement, la charnière 23 relie les deux embouts en continu et résulte d'un amincissement de matière lors du moulage d'une seule pièce des embouts 21 et 31, et de la charnière 23.

L'embout 21 est constitué d'une plaquette 24 de forme générale rectangulaire munie, sur son bord 27 opposé à celui le long duquel est ménagée la charnière 23, de pattes longitudinales 25 qui s'étendent contre le mur au delà du bord 27 de la plaquette 24 et sont reçues dans des logements 14 définis par le fond 12 du corps 11 du tronçon 10, lequel fond 12 ayant une section en forme de U au droit desdits logements 14.

La plaquette 24 de l'embout 21 présente également des languettes élastiques 26 longitudinales qui, elles aussi, s'étendent au delà du bord 27 ; selon l'exemple représenté, les languettes élastiques 26 font saillie par rapport à la face qui les porte et ont une section par un plan horizontal, par rapport aux figures, globalement en forme de Z en sorte que, lorsque les pattes longitudinales 25 de l'embout 21 sont introduites dans les logements 14 définis par le fond 12 du corps 11, les languettes élastiques 26 prennent appui sur la face du fond 12 opposée à celle qui est appliquée au mur, maintenant ainsi la plaquette 24 de l'embout 21 dans le prolongement du fond 12, et compensant les jeux résultant de l'assemblage des pattes 25 dans les logements 14.

L'embout 31 a une forme générale identique à celle de l'embout 21, se déduisant de l'embout 21 globalement par symétrie par rapport à la charnière 23 ; ainsi, il comporte une plaquette 34 munie, du côté de son bord transversal externe 37, de pattes longitudinales 35 et de languettes élastiques longitudinales 36, analogues respectivement aux pattes longitudinales 25 et aux languettes élastiques longitudinales 26 de l'embout 21.

La coiffe 40 comprend deux montants 41, 51 transversaux recouverts extérieurement et assemblés par une peau 43 en matière souple et élastique ; le montant 40 comprend une partie plane allongée 47 prolongée à son extrémité dite supérieure par une partie 42, ayant une forme, par exemple cylindrique, correspondant à celle du couvercle 13 du tronçon de conduit 10, de largeur croissante et portant à son extrémité un rebord longitudinal 46 s'étendant vers la partie allongée 47 dans un plan parallèle à celui de la partie allongée 47 tout en lui étant perpendiculaire; sur sa face tournée du côté du rebord longitudinal 46, la partie allongée 47 porte des languettes élastiques transversales 49 dont le rôle apparaîtra ci-après.

Le montant 51 a une forme générale identique à celle du montant 41, se déduisant du montant 41 par symétrie par rapport à un plan perpendiculaire à une grande face de sa partie allongée 47 ; ainsi, il comporte des languettes élastiques transversales 59 et un rebord longitudinal 56 analogues, respectivement, aux languettes élastiques transversales 49 et au rebord longitudinal 46 du montant 41.

Lorsque les montants 41, 51 et la peau 43 sont assemblés, les parties planes 47, 57 des montants 41, 51 s'étendent perpendiculairement l'un à l'autre, comme le montrent les figures 3 et 4 ; la coiffe 40 est obtenue par moulage de deux matières constituant l'une les montants 41, 51, d'une part, et l'autre la peau 43, d'autre part ; ces deux matières sont choisies avantageusement non compatibles chimiquement de sorte que, en surmoulant la peau 43 sur les montants 41, 51, après cette opération de surmoulage la peau 43 n'adhère pas sur les surfaces des montants 41, 51 avec lesquelles elle est en contact ; de bons résultats ont été obtenus en choisissant pour les montants 41, 51 du Polyamide 6 et pour la peau 43 un Polyétherester tel que celui vendu sous la dénomination commerciale SANTOPRENE^{®} ; d'autres bons résultats ont été obtenus en choisissant pour les montants du Polybutadiène Téréphtalate tel que celui vendu sous la dénomination commerciale VALOX^{®} et pour la peau du Styrène-Ethylène-Butadiène-Styrène tel que celui vendu sous le dénomination commerciale TAFABLOC^{®} ; le maintien de la peau 43 est obtenu par des tétons de matière de peau remplissant lors du surmoulage des ouvertures transversales 45 ménagées dans les montants 41, 51.

La coiffe 40 est destinée à être montée sur le connecteur 20 en vue de recouvrir celui-ci à la manière d'un couvercle ; à cet effet, le connecteur 20 présente à sa partie supérieure, plus exactement au droit des bords supérieurs des plaquettes 24, 34 des embouts 21, 31 , des pattes transversales dites supérieures 28, 38 s'étendant légèrement à distance du mur, lorsque le connecteur 20 est fixé sur les murs, et vers le haut de façon à recevoir les rebords longitudinaux 46, 56 de la coiffe 40 qui sont dirigés vers le bas, lesdits rebords s'étendant alors après montage entre la face d'application des murs et les pattes supérieures 28, 38 ; les languettes élastiques transversales 49, 59 de la coiffe 40 sont adaptées à s'accrocher de la même manière mais élastiquement sur des pattes transversales dites intermédiaires 29, 39 portées par les embouts 21, 31 et dirigées également vers le haut, les languettes élastiques transversales 49, 59 étant dirigées vers le bas ; les pattes intermédiaires 29, 39 sont portées par des cloisons 61, 71 qui s'étendent perpendiculairement aux plaquettes 24, 34 des embouts 21, 31 respectivement, c'est-à-dire horizontalement par rapport aux figures ; le maintien des cloisons 61, 71 peut être renforcé, comme représenté sur les figures, par des équerres 62, 72 ; les cloisons 61, 71 ont une forme générale de trapèzes rectangles dont le côté incliné s'étend jusqu'au voisinage du plan passant par la charnière 23 à mi-chemin entre les plaquettes 24, 34, ledit plan faisant ainsi avec le plan des plaquettes 24, 34 un angle de l'ordre de 45 degrés ; lorsque le connecteur 20 est plaqué dans l'angle de deux murs, les plaquettes 24, 34 peuvent être amenées à faire entre elles un angle qui, égal à l'angle des deux murs, peut avoir des valeurs différentes, par exemple compris entre 85 et 95 degrés ; ainsi, les plaquettes 24, 34 sont amenées à se débattre angulairement l'une par rapport à l'autre autour de la charnière 23 ; pour ne pas gêner ce débattement, il est préférable de décaler légèrement les cloisons 61 de l'embout 21, d'une part, par rapport aux cloisons 71 de l'embout 31, d'autre part, de façon à ce que, lors de ce débattement, les cloisons d'un embout ne se déplacent pas dans le même plan dans lequel se déplacent les cloisons de l'autre embout.

Lorsque les tronçons de conduit 10 présentent des cloisonnements 15 longitudinaux permettant par exemple de séparer des conducteurs en fonction de leur puissance et/ou de leur utilisation, il est avantageux de disposer les cloisons 61, 71 en sorte que, lorsque le corps 11 et le connecteur 20 sont en place, les cloisons 61, 71 sont au droit des cloisonnements 15 de façon à assurer également dans l'angle la continuité de la séparation.

La mise en oeuvre du dispositif de raccordement selon l'invention résulte de la description ci-dessus; le connecteur 20 est placé dans l'angle des deux murs ; on pourrait l'y fixer mais cette opération n'est pas indispensable car il y sera maintenu par les deux tronçons de conduit 10 placés et fixés sur les murs de part et d'autre dudit angle ; les deux tronçons de conduit 10 sont donc mis en place en enfilant latéralement les corps 11 des tronçons en sorte que les échancrures 14 recouvrent les pattes longitudinales 25, d'une part, et 35, d'autre part, les fonds 12 du corps 11 des tronçons 10 se placant sous les languettes longitudinales élastiques 26, d'une part, et 36, d'autre part, qui s'y appuient élastiquement ; ainsi, les fonds 12 étant fixés aux murs, les embouts 21, 31 du connecteur 20 sont maintenus par les tronçons 10 qui par ailleurs appliquent les embouts 21, 31 sur chacun des murs, les embouts 21, 31 se conformant à l'angle des deux murs quel qu'il soit, compris par exemple entre 85 et 95 degrés, grâce à la charnière souple 23 qui les relie ; après mise en place des organes électriques, tels que des conducteurs, dans le corps 11, les couvercles 13 sont mis en place sur les corps 11 ; pour terminer la fermeture des conduits, on recouvre le connecteur 20 de la coiffe 40 ; pour ce faire celle-ci est placée dans l'angle des murs en étant décalée vers le haut par rapport au connecteur 20 d'une hauteur plus grande que la hauteur des pattes 28, 29, 38, 39 mais inférieure à la distance verticale qui sépare les cloisons 61, 71 du connecteur 20 ; en déplaçant, à partir de cette position, la coiffe 40 verticalement vers le bas, ses rebords 46, 56 prennent place derrière les pattes 28, 38 et les languettes élastiques 49, 59 derrière les pattes 29, 39 qu'elles pincent élastiquement contre les parties 47, 57 des montants 41, 51 ; l'élasticité de la peau 43 permet à la coiffe 40 de s'adapter à l'angle réel des deux murs et d'assurer l'esthétique de la finition, la peau 43 pouvant glisser sur les montants 41, 51 si nécessaire ; avantageusement, les montants 41, 51 présentent latéralement des feuillures 44, 54 respectivement adaptées à l'épaisseur des couvercles 13, les extrémités des couvercles 13 étant recouvertes par ces feuillures : on obtient ainsi une meilleure finition de l'ensemble.

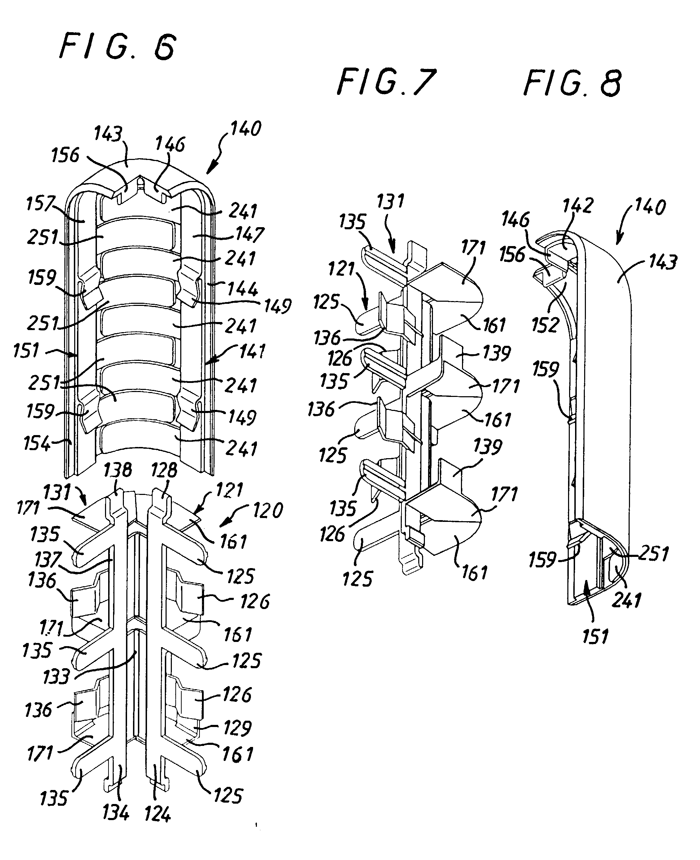

La variante de dispositif de raccordement selon l'invention représentée sur les figures 6 à 8 est adaptée à être utilisée lorsque l'angle des deux murs est un angle extérieur, c'est-à-dire saillant ; ce dispositif est analogue au dispositif précédemment décrit en référence aux figures 1 à 5 et qui était adapté au cas où ledit angle est intérieur, c'est-à-dire rentrant ; les éléments transversaux du dispositif de la variante précédente qui faisaient entre eux un angle de l'ordre de 90 degrés sont ici remplacés par des éléments analogues mais faisant entre eux un angle de l'ordre de 270 degrés ; les parties du dispositif selon cette variante identiques ou jouant le même rôle que celles du dispositif de la variante précédente portent sur les figures les mêmes références que ces parties précédées du chiffre 1 ; dès lors cette variante ne sera pas décrite en détail ; dans le cas d'un angle extérieur, la peau 143 de la coiffe 140 est bien entendu de plus grande largeur que dans le cas où l'angle est intérieur ; dès lors on préfère prévoir des arcs, en forme de côtes, cintrés à la forme de la peau 143 en section pour soutenir celle-ci ; c'est là la différence essentielle entre les coiffes 40 et 140 des deux variantes ; comme cela est visible sur la figure 6, les montants 141, 151 de la coiffe 140 présentent des arcs 241, 251, respectivement, les arcs 241 s'intercalant entre les arcs 251 ; la longueur des arcs est inférieure à la longueur de peau entre les parties planes 147 et 157 des montants 141, 151, de sorte que, tout en assurant un support pour la peau 143, les arcs 241, 251 peuvent suivre le mouvement d'adaptation des montants 141, 151 à l'angle des murs.

L'invention n'est pas limitée aux formes de réalisation décrites et représentées, mais englobe toute variante d'exécution ; en particulier, bien que les variantes décrites concernent des murs ou cloisons faisant un angle voisin de 90 degrés, elle s'applique également pour tout autre angle, tel que par exemple voisin de 180 degrés.

## Revendications

1. Dispositif de raccordement d'angle pour conduit à corps en gouttière et couvercle, du type comportant un connecteur (20, 120) pour joindre les corps (11) de deux tronçons de conduit (10) et une coiffe (40, 140) pour joindre les couvercles (13) desdits deux tronçons, des moyens complémentaires d'accrochage étant prévus pour le maintien de la coiffe (40, 140) par rapport au connecteur (20, 120), caractérisé par le fait que le connecteur (20, 120) est constitué de deux embouts (21, 31 ; 121, 131) articulés par une charnière (23, 123) et la coiffe (40, 140) comprend deux montants (41, 51 ; 141, 151) recouverts et assemblés par une peau (43, 143) en matière souple et élastique.

2. Dispositif selon la revendication 1, caractérisé par le fait que les embouts (21, 31 ; 121, 131) sont en matière plastique moulée et la charnière (23, 123) résulte d'un amincissement de matière lors du moulage d'une seule pièce des embouts (21, 31 ; 121, 131) et de la charnière (23, 123).

3. Dispositif selon l'une des revendications 1 ou 2, caractérisé par le fait que les embouts (21, 31 ; 121, 131) sont constitués d'une plaquette (24, 34 ; 124, 134) munie sur son bord (27, 127) opposé à celui le long duquel est ménagée la charnière (23, 123) de pattes longitudinales (25, 35 ; 125, 135) destinées à être reçues dans des logements (14) définis par un fond (12) du corps (11) des tronçons de conduit (10) et le mur ou cloison sur lequel ledit fond (12) est fixé.

4. Dispositif selon la revendication 3, caractérisé par le fait que la plaquette (24, 34 ; 124, 134) est munie sur ce même dit bord (27, 127) de languettes élastiques (26, 36 ; 126, 136) longitudinales destinées à prendre appui élastiquement sur la face dudit fond (12) opposée à celle qui est appliquée au mur ou cloison.

5. Dispositif selon l'une des revendications 1 à 4, caractérisé par le fait que les montants (41, 51 ; 141, 151) de la coiffe (40, 140) sont constitués d'une partie plane allongée (47, 57 ; 147, 157) prolongée par une partie (42, 52; 142, 152) ayant une forme correspondant à celle du couvercle (13) du tronçon de conduit (10) avec lequel elle est adaptée à coopérer.

6. Dispositif selon l'une des revendications 1 à 5, caractérisé par le fait que les montants (41, 51 ; 141, 151), d'une part, et la peau (43, 143), d'autre part, sont en matières plastiques non compatibles chimiquement.

7. Dispositif selon l'une des revendications 1 à 6, caractérisé par le fait que les moyens complémentaires d'accrochage sont constitués par des pattes transversales (28, 38 ; 128, 138) portées par le connecteur (20, 120) qui coopèrent avec des rebords longitudinaux (46, 56 ; 146, 156) portés par les montants (41, 51 ; 141, 151) de la coiffe (40, 140) et dirigés en sens contraire par rapport à celui desdites pattes transversales (28, 38 ; 128, 138).

8. Dispositif selon l'une des revendications 1 à 6, caractérisé par le fait que les moyens complémentaires d'accrochage sont constitués par des pattes transversales (29, 39 ; 129, 139) portées par le connecteur (20, 120) qui coopèrent avec des languettes élastiques transversales (49, 59 ; 149, 159) portées par les montants (41, 51 ; 141, 151) de la coiffe (40, 140i et dirigées en sens contraire par rapport à celui desdites pattes transversales (29, 39 ; 129, 139).

9. Dispositif selon l'une des revendications 7 ou 8, caractérisé par le fait que les moyens d'accrochage (46, 56 ; 146, 156 ; 49, 59 ; 149, 159) portés par la coiffe (40, 140) s'étendent vers l'extrémité plane des montants (41,51 ; 141, 151).

10. Dispositif selon l'une des revendications 1 à 9, caractérisé par le fait que les montants (141, 151) de la coiffe (140) présentent des arcs (241, 251), un arc (241) de l'un (141) étant intercalé entre deux arcs (251) de l'autre (151).

## Patentansprüche

1. Eckverbindungsvorrichtung für einen Kanal mit einem rinnenförmigen Körper und einer Abdeckung, umfassend ein Verbindungselement (20, 120), um die Körper (11) von zwei Kanalabschnitten (10) zu verbinden, und eine Abdeckplatte (40, 140), um die Abdeckungen (13) der beiden Abschnitte zu verbinden, und komplementäre Einhakmittel, die vorgesehen sind, um die Abdeckplatte (40, 140) bezüglich des Verbindungselements (20, 120) festzuhalten, dadurch gekennzeichnet, daß das Verbindungselement (20, 120) durch zwei durch ein Scharnier (23, 123) aneinander angelenkte Endteile (21, 31 ; 121, 131) gebildet ist, und daß die Abdeckplatte (40, 140) zwei Säulen (41, 51 ; 141, 151) umfaßt, die durch eine Haut (43, 143) aus nachgiebigem und elastischem Material bedeckt und zusammengebaut sind.

2. Vorrichtung nach Anspruch 1, dadurch gekennzeichnet, daß die Endteile (21, 31 ; 121, 131) aus geformtem Kunststoffmaterial bestehen, und daß das Scharnier (23, 123) aus einer Verengung des Materials bei der einstückigen Formung der Endteile (21, 31 ; 121, 131) und des Scharniers (23, 123) herrührt.

3. Vorrichtung nach einem der Ansprüche 1 oder 2, dadurch gekennzeichnet, daß die Endteile (21, 31 ; 121, 131) aus einem Plättchen (24, 34 ; 124, 134) gebildet sind, das an seinem Rand (27, 127), der demjenigen entgegengesetzt ist, entlang welchem das Scharnier (23, 123) vorgesehen ist, mit länglichen Lappen (25, 35 ; 125, 135) versehen ist, die dazu bestimmt sind, in Aufnahmen (14) aufgenommen zu werden, die durch einen Boden (12) des Körpers (11) der Kanalabschnitte (10) und die Mauer oder Wand, an der der Boden (12) befestigt ist, festgelegt sind.

4. Vorrichtung nach Anspruch 3, dadurch gekennzeichnet, daß das Plättchen (24, 34; 124, 134) an demselben Rand (27, 127) mit elastischen, länglichen Zungen (26, 36; 126, 136) versehen ist, die dazu bestimmt sind, elastisch auf der Seite des Bodens (12) aufzuliegen, die derjenigen entgegengesetzt ist, die an der Mauer oder Wand angebracht ist.

5. Vorrichtung nach einem der Ansprüche 1 bis 4, dadurch gekennzeichnet, daß die Säulen (41, 51 ; 141, 151) der Abdeckplatte (40, 140) durch einen flachen, länglichen Teil (47, 57 ; 147, 157) gebildet sind, der durch einen Teil (42, 52 ; 142, 152) verlängert ist, der eine Form aufweist, die derjenigen der Abdeckung (13) des Kanalabschnitts (10) entspricht, mit dem sie zusammenarbeiten soll.

6. Vorrichtung nach einem der Ansprüche 1 bis 5, dadurch gekennzeichnet, daß einerseits die Säulen (41, 51 ; 141, 151) und andererseits die Haut (43, 143) aus chemisch nicht kompatiblen Kunststoffmaterialien bestehen.

7. Vorrichtung nach einem der Ansprüche 1 bis 6, dadurch gekennzeichnet, daß die komplementären Einhakmittel durch Querlappen (28, 38 ; 128, 138) gebildet sind, die durch das Verbindungselement (20, 120) getragen sind, das mit länglichen Leisten (46, 56 ; 146, 156) zusammenarbeitet, die durch die Säulen (41, 51 ; 141, 151) der Abdeckplatte (40, 140) getragen sind und in die entgegengesetzte Richtung bezüglich derjenigen dieser Querlappen (28, 38 ; 128, 138) gerichtet sind.

8. Vorrichtung nach einem der Ansprüche 1 bis 6, dadurch gekennzeichnet, daß die komplementären Einhakmittel durch Querlappen (29, 39 ; 129, 139) gebildet sind, die durch das Verbindungselement (20, 120) getragen sind und mit elastischen Querzungen (49, 59 ; 149, 159) zusammenarbeiten, die durch die Säulen (41, 51; 141, 151) der Abdeckplatte (40, 140) getragen sind und in die entgegengesetzte Richtung bezüglich derjenigen dieser Querlappen (29, 39 ; 129, 139) gerichtet sind.

9. Vorrichtung nach einem der Ansprüche 7 oder 8, dadurch gekennzeichnet, daß die Einhakmittel (46, 56 ; 146, 156 ; 49, 59 ; 149, 159), die durch die Abdeckplatte (40, 140) getragen sind, sich in Richtung des flachen Endes der Säulen (41, 51 ; 141, 151) erstrecken.

10. Vorrichtung nach einem der Ansprüche 1 bis 9, dadurch gekennzeichnet, daß die Säulen (141, 151) der Abdeckplatte (140) Bögen (241, 251) aufweisen, wobei ein Bogen (241) der einen Säule (141) zwischen zwei Bögen (251) der anderen (151) verläuft.

## Claims

1. An angle connecting device for a conduit with a body in the form of a channel and a cover, of the type comprising a connector (20, 120) for joining the bodies (11) of two conduit portions (10) and a cap (40, 140) for joining the covers (13) of said two portions, complementary latching means being provided for holding the cap (40, 140) with respect to the connector (20, 120), characterised in that the connector (20, 120) is formed by two end portions (21, 31; 121, 131) which are pivotably connected by a hinge (23. 123) and the cap (40, 140) comprises two uprights (41, 51; 141, 151) which are covered and assembled by a skin (43, 143) of flexible and elastic material.

2. A device according to claim 1 characterised in that the end portions (21, 31; 121, 131) are of moulded plastics material and the hinge (23, 123) results from a reduction in the thickness of material when the end portions (21, 31; 121, 131) and the hinge (23, 123) are moulded in one piece.

3. A device according to one of claims 1 and 2 characterised in that the end portions (21, 31; 121, 131) are formed by a plate (24, 34; 124, 134) provided on its edge (27, 127) opposite to that along which the hinge (23, 123) is disposed with longitudinal lugs (25. 35; 125, 135) intended to be received in housings (14) defined by a bottom (12) of the body (11) of the conduit portions (10) and the wall or partition to which said bottom (12) is fixed.

4. A device according to claim 3 characterised in that the plate (24, 34; 124, 134) is provided on said same edge (27, 127) with elastic longitudinal tongues (26, 36; 126, 136) intended to bear elastically against the face of said bottom (12), which face is opposite to that which is applied to the wall or partition.

5. A device according to one of claims 1 to 4 characterised in that the uprights (41, 51; 141, 151) of the cap (40, 140) are formed by a flat elongate part (47, 57; 147, 157) prolonged by a part (42, 52; 142, 152) of a shape corresponding to that of the cover (13) of the conduit portion (10) with which it is adapted to co-operate.

6. A device according to one of claims 1 to 5 characterised in that the uprights (41, 51; 141, 151) on the one hand and the skin (43, 143) on the other hand are of plastics materials which are not chemically compatible.

7. A device according to one of claims 1 to 6 characterised in that the complementary latching means are formed by transverse lugs (28, 38; 128, 138) carried by the connector (20, 120) which co-operate with longitudinal rim portions (46, 56; 146, 156) carried by the uprights (41, 51; 141, 151) of the cap (40, 140) and directed in the opposite direction with respect to that of said transverse lugs (28, 38, 128, 138).

8. A device according to one of claims 1 to 6 characterised in that the complementary latching means are formed by transverse lugs (29, 39; 129, 139) carried by the connector (20, 120), which co-operate with elastic transverse tongues (49, 59; 149, 159) carried by the uprights (41, 51; 141, 151) of the cap (40, 140) and directed in the opposite direction with respect to that of said transverse lugs (29, 39; 129, 139).

9. A device according to one of claims 7 and 8 characterised in that the latching means (46, 56; 146, 156; 49, 59; 149, 159) carried by the cap (40, 140) extend towards the flat end of the uprights (41, 51; 141, 151).

10. A device according to one of claims 1 to 9 characterised in that the uprights (141, 151) of the cap (140) have arcs (241, 251), an arc (241) of the one (141) being interposed between two arcs (251) of the other (151).
